# EUROPEAN PATENT SPECIFICATION

(11) **EP 4 194 102 B1**
(45) Date of publication and mention of the grant of the patent: **07.10.2026**
(21) Application number: 22204553.6
(22) Date of filing: 12.09.2019
(51) Int. Cl.: B05C 11/10

(54) **GLUE APPLICATION DEVICE FOR PRODUCING BATTERY**
KLEBSTOFFAUFTRAGSVORRICHTUNG ZUR HERSTELLUNG EINER BATTERIE
DISPOSITIF D'APPLICATION DE COLLE POUR LA FABRICATION D'UNE BATTERIE

(30) Priority: 13.09.2018 CN 201821501274 U
(43) Date of publication of application: 14.06.2023
(62) Document number(s) of the earlier application(s) in accordance with Art. 76 EPC: 19861062.8 / 3 795 261
(73) Proprietor: Contemporary Amperex Technology (Hong Kong) Limited, Central, Central And Western District (HK)
(72) Inventor: ZHOU, Xinyu, Ningde, 352100 (CN); XU, Huayong, Ningde, 352100 (CN); DU, Xiandong, Ningde, 352100 (CN); ZHANG, Rui, Ningde, 352100 (CN)
(74) Representative: Gong, Jinping

(56) References cited:
- CN-A- 106 824 678
- CN-A- 107 046 147
- DE-A1- 102012 016 170
- US-A1- 2002 071 772

## Description

### TECHNICAL FIELD

The present application relates to the technical field of glue application, and in particular, to a glue application device for producing a battery as specified in any of claims 1-9.

### BACKGROUND

During the production process of a battery module, a plurality of cells in the battery module need to be glued with the housing which at one hand improves the safety of the entire battery module, and on the other hand further improves the heat dissipation efficiency of the battery module. At present, when the battery module is assembled, a structural glue with good bonding effect is typically used to connect a plurality of cells as well as two end plates first, and then an insulation test and tests regarding such parameters as power and voltage are performed to the semi-finished battery module. In the process of connecting the plurality of cells with the structural glue, it is desirable to provide fixed connection based on the upper surface of the pole of the cells, which facilitates testing and the subsequent welding process of connecting plates of cells, and also ensures the safety of the battery module. However, as there are dimensional tolerances among different cells in the height direction of cells, bonded cells of different sizes may have unaligned bottoms. Currently, the amount of glue applied between the cells and the bottom plate is a fixed value. This may result in insufficient bonding and reducing heat dissipation efficiency provided by the glue due to insufficient glue in certain areas on the bottom plate, and also overflowing of the glue due to excessive glue in some areas on the bottom plate, which is adverse to the improvement of the quality of the entire battery module. US 2002/071772A1 describes a highly-viscous-fluid applying apparatus.

### SUMMARY

An objective of the present application is to provide a glue application device as specified in any of claims 1-9 to solve the problem that the prior art glue application devices cannot change the amount of glue applied on the bottom of each cell according to the actual size of the cell.

The present application provides a glue application device, including:
a frame;
a glue application mechanism installed on the frame;
a module height measuring mechanism, used for measuring height differences between a plurality of cells in a battery module;
a glue amount control mechanism, communicated with both the module height measuring mechanism and the glue application mechanism, and arranged to control the amount of glue applied by the glue application mechanism to the plurality of cells respectively according to the height differences.

The module height measuring mechanism comprises an enclosure support platform and a height measuring unit. The enclosure support platform is used for supporting an enclosure of the battery module. The height measuring unit is arranged corresponding to the enclosure support platform, and arranged to measure distances from bottom surfaces of the plurality of cells to the enclosure support platform respectively. The height measuring unit comprises a plurality of elastic height measuring probes, and the plurality of elastic height measuring probes are arranged in one-to-one correspondence to the plurality of cells to measure distances from the bottom surfaces of the cells and the enclosure support platform.

Preferably, the module height measuring mechanism further comprises a digital-to-analog conversion unit. The plurality of elastic height measuring probes are all connected to the digital-to-analog conversion unit. The digital-to-analog conversion unit is communicated with the glue amount control mechanism.

Preferably, a plurality of the height measuring units are evenly and linearly arranged.

Preferably, a plurality of the height measuring units are arranged at a middle position of the enclosure support platform to measure a height from a middle part on the bottom of the cell to the enclosure support platform.

Preferably, the module height measuring mechanism further comprises a pressing unit installed on the enclosure support platform, and arranged to press the battery module downwards.

Preferably, a plurality of pressing units are provided, and a plurality of the pressing units are arranged around the height measuring units.

Preferably, the module height measuring mechanism further comprises a limiting block installed on the enclosure support platform to be engaged and fitted with the battery module.

Preferably, the glue application device provided by the present application further comprises a movable mount, through which the glue application mechanism is installed on the frame.

Preferably, the glue application device provided by the present application further comprises a feeding manipulator arranged on a side of the frame.

The present application has the following beneficial effects:
In the glue application device provided by the present application, the glue application mechanism installed on the frame is used to apply glue to cells. The module height measuring mechanism can measure the height differences between a plurality of cells in the battery module, and output the measurement results to the glue amount control mechanism. The glue amount control mechanism may accordingly control the amount of glue applied during the application of glue to individual cells by the glue application mechanism based on the height differences described above, so that insufficient glue or excessive glue is avoided when a plurality of the cells are fitted with the bottom plate, thereby improving the overall quality of the battery module.

It should be understood that the above general description and the following detailed description are exemplary and are not intended to limit the present application.

### BRIEF DESCRIPTION OF DRAWINGS

FIG. 1 is a partially structural schematic diagram of a glue application device provided by an embodiment of the present application.
FIG. 2 is a structural schematic diagram of a module height measuring mechanism in a glue application device provided by an embodiment of the present application.
FIG. 3 is a structural schematic diagram of a feeding manipulator in a glue application device provided by an embodiment of the present application.

### Reference Numerals:

1. frame;
2. glue application mechanism;
3. module height measuring mechanism;
   31. enclosure support platform;
      311. middle notch;
   32. height measuring unit;
   33. digital-to-analog conversion unit;
   34. pressing unit;
      341. driving member;
      342. pressing head;
   35. limiting block;
   36. mounting rack;
4. movable mount;
5. feeding manipulator;
   51. fixture;
   52. movable unit;
6. battery module; and
7. bottom plate.

The accompanying drawings herein, which are incorporated into the specification and constitute a part of the specification, illustrate the embodiments in accordance with the present application and explain the principles of the present application together with the description.

### DETAILED DESCRIPTION

The present application is described in further detail below through specific embodiments and with reference to the accompanying drawings.

In the description of the present application, unless otherwise clearly specified or defined, terms "first", "second", "third" and "fourth" are used only for the purpose of description, and do not indicate or imply relative importance. The term "a plurality of" means two or more. The terms such as "connection" and "fixation" are comprehended in a broad sense. For example, "connection" may be fixed connection, or removable connection, or integral connection, or electrical connection. It may be direct connection, or indirect connection through an intermediate medium. Those of ordinary skill in the art may understand the specific meanings of the foregoing terms in the present application based on the specific context.

It should be understood that in the description of this specification, the directional terms such as "above", "below", "left" and "right" described in embodiments of the present application are described as shown in the drawings, and should not be construed as a limitation to embodiments of the present application. In addition, it should also be understood that in this context, when an element is referred as connected "above" or "below" another element, the element can not only be directly connected "above" or "below" another element, but can also be indirectly connected "above" or "below" another element through an intermediate element.

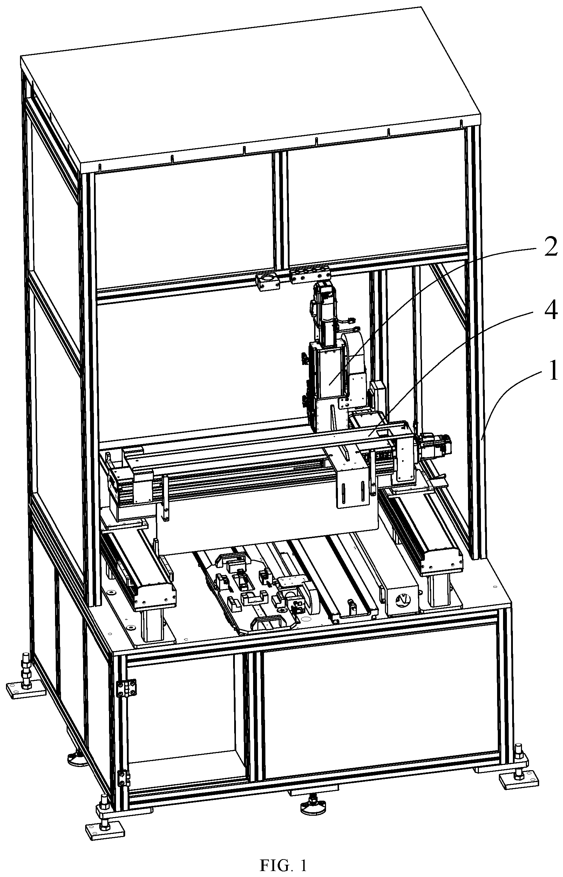

As shown in FIGS. 1-3, an embodiment of the present application provides a glue application device. The glue application device flexibly changes the amount of glue applied on a bottom of a battery module 6 according to the actual size of each cell in the battery module 6 when the battery module 6 is assembled so that insufficient glue or excessive glue can be avoided when the plurality of cells are fitted with a bottom plate 7, thereby improving the overall quality of the battery module 6. The glue application device includes a frame 1, a glue application mechanism 2, a module height measuring mechanism 3 and a glue amount control mechanism (not shown in the figures). The glue application mechanism 2 is used to squeeze and apply glue onto a component to be glued, and may be installed on the frame 1 through a connecting member. The module height measuring mechanism 3 is used to measure height differences between a plurality of cells in the battery module. It should be noted that in order to facilitate the measurement work, the battery module 6 to be measured may include an enclosure and a plurality of cells, and is not be connected to the bottom plate 7. The enclosure may comprise a side plate and an end plate, which may be fixedly connected by means of welding to form the enclosure. A structural glue may be used to fixedly connect a plurality of the cells together, and the cells to the end plate in advance. In addition, in order to ensure the operational reliability of the battery module 6, before the structural glue is applied, the upper surfaces of poles of the plurality of cells may be arranged in an aligned manner, and then connected by the structural glue. Due to dimensional tolerances among the cells, a plurality of cells may have bottoms unaligned. That is, after the battery module 6 is connected to the bottom plate 7, distances between cells and the bottom plate 7 are different. It is embodied in the module height measuring mechanism 3 that dimensional differences between bottom surfaces of cells and the bottom surface of the enclosure (or the bottom surface of the end plate) may vary. Therefore, in a preferred embodiment, the module height measuring mechanism 3 comprises an enclosure support platform 31 and a height measuring unit 32. The enclosure support platform 31 has a support plane, and the support plane is used to support the enclosure of the battery module 6, so that the height differences of the plurality of cells are measured based on the enclosure support platform. The height measuring unit 32 is used to measure distances from the bottom surfaces of cells to the enclosure support platform 31, that is, the height differences between the cells.

It may be known from the above description that in the glue application device provided by the present application, the glue application mechanism 2 installed on the frame 1 is used to apply glue to the cells. The module height measuring mechanism 3 enables to measure the height differences between the plurality of cells in the battery module 6 and outputs the measurement results to the glue amount control mechanism. The glue amount control mechanism accordingly controls the amount of the glue applied during the process of glue application to individual cells by the glue application mechanism 2 according to the height differences, so that insufficient glue or excessive glue can be avoided when the plurality of cells are fitted with the bottom plate 7, thereby improving the overall quality of the battery module.

Specifically, the enclosure support platform 31 may have a flat plate structure made of a hard material such as metal. In addition, in order to reduce the difficulty of operation by the height measuring unit 32, the enclosure support platform 31 may be arranged as a ring structure, through which the enclosure of the battery module 6 may be supported, so that the battery module 6 rests on the enclosure support platform 31. The ring-shaped enclosure support platform 31 has a middle notch 311 which exposes the plurality of cells. A height measuring unit 32 may be arranged at the middle notch 311 to measure the dimensional differences between the cells and the enclosure support platform 31. The height measuring unit 32 may particularly be a distance meter or a distance measuring sensor and the like. Preferably, the module height measuring mechanism 3 further comprises a mounting rack 36. Both the enclosure support platform 31 and the height measuring unit 32 may be connected to the mounting rack 36 by a connecting member and are arranged correspondingly so that after the battery module 6 rests on the enclosure support platform 31, the height measuring unit 32 may be used to measure the distances from the plurality of cells in the battery module 6 to a top surface of the enclosure support platform 31 (or the bottom surface of the bottom plate). After the measurement process is completed, the module height measuring mechanism 3 may transmit the measurement results to the glue amount control mechanism. The glue amount control mechanism may flexibly design the demand amount of glue in areas corresponding to individual cells on the bottom plate 7 according to the above-mentioned measurement results. For example, if the distance between a cell and the enclosure support platform 31 is large, the demand amount of glue for the area on the bottom plate 7 corresponding to the cell is large. Conversely, if the distance between a cell and the enclosure support platform 31 is small, the demand amount of glue for the corresponding area on the bottom plate 7 is small. Specifically, the glue amount control mechanism may be connected to the module height measuring mechanism 3 and the glue application mechanism 2 respectively by means of wired or wireless transmission to perform signal transmission, so as to achieve the purpose of controlling the amount of glue.

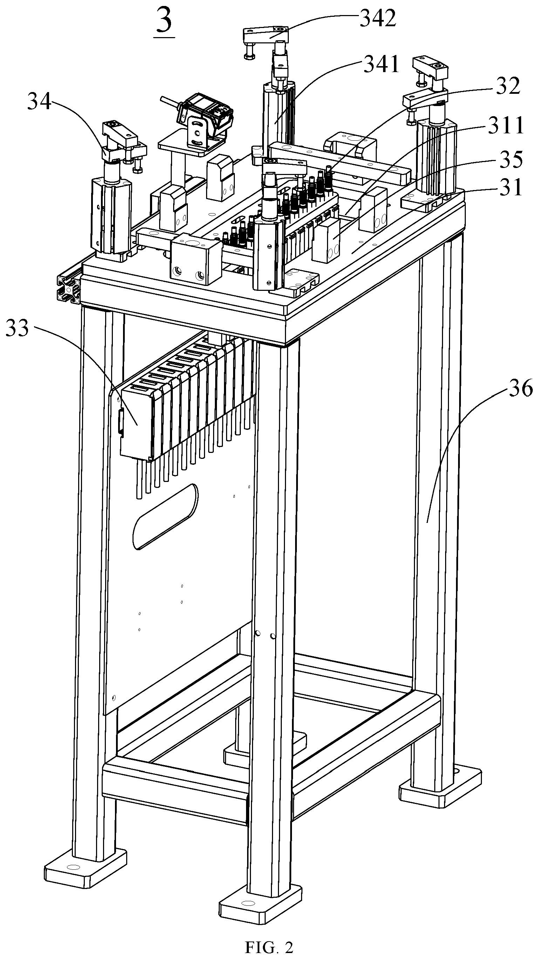

Further, as shown in FIG. 2, an elastic height measuring probe is used to measure the distance between the bottom surface of a cell and the enclosure support platform 31. Such distance measuring component has a simple structure, relatively high sensitivity and low cost. Accordingly, the module height measuring mechanism 3 may be further provided therein with a digital-to-analog conversion unit 33 to convert the size value measured by the elastic height measuring probe into an electrical signal or another communication signal and output the signal to the glue amount control mechanism. A plurality of the elastic height measuring probes are arranged. A plurality of the elastic height measuring probes are arranged in one-to-one correspondence to the plurality of cells to measure distances from the bottom surfaces of the cells and the enclosure support platform 31. Specifically, the elastic height measuring probe includes a measuring head, an elastic member and a main body. The measuring head is flexibly connected to the main body through the elastic member. The measuring heads of the plurality of elastic height measuring probes are arranged in an aligned manner and all protruded out of an upper surface of the enclosure support platform 31. Those skilled in the art can flexibly change the distance by which the measuring heads protrude out of the enclosure support platform 31 according to the actual condition, so as to ensure the accuracy of the measurement result. Preferably, the plurality of height measuring units 32 are evenly and linearly arranged, and the distances between the plurality of height measuring units 32 may be set as fixed values. The arrangement further reduces the installation difficulty of the height measuring units 32 and may also improve the accuracy of the measurement result to a certain extent. In addition, the plurality of height measuring units 32 may all be arranged at middle positions of the enclosure support platform 31, that is, the plurality of height measuring units 32 are arranged in the center in the middle notch 311 along the arrangement direction of the cells. This prevents big deviation in distance from the both ends of the bottom surface of a cell to the enclosure support platforms 31 in case one cell tilts relative to other cells due to misoperation in bonding the cells. However, by measuring the middle position on the bottom surface of the cell, even if the cell tilts, the accuracy of the measurement result may not be affected, thereby preventing the tilt of the cell from adversely affecting the measurement result.

During the measurement process, the elastic height measuring probe applies an elastic force onto the battery module 6 along a vertical upward direction. In order to prevent the above-mentioned elastic force from affecting the accuracy of the measurement result, preferably, the module height measuring mechanism 3 may also be provided with a pressing unit 34. The pressing unit 34 is installed on the enclosure support platform 31. In the process of measuring the battery module 6, the pressing unit 34 may apply a downward pressure onto the battery module 6 to prevent the accuracy of the measurement result from being affected by conditions such as warping or shaking of the battery module 6. Specifically, the pressing unit 34 may comprise a driving member 341 and a pressing head 342. The driving member 341 can be a driving cylinder and a hydraulic cylinder, etc. The driving member 341 may be fixed on the enclosure support platform 31. The pressing head 342 may be connected at a driving head of the driving member 341, so that when the battery module 6 is measured, the pressing unit 34 enables to apply a downward pressure onto the battery module 6. Optionally, the pressing head 342 may be fitted with the enclosure of the battery module 6 to prevent a battery module 6 not connected to the bottom plate 7 from loosening or even disintegrating. Preferably, a plurality of pressing units 34 may be provided. Since the battery module 6 generally has a square shape, optionally, the enclosure support platform 31 may have a square ring structure. Accordingly, four pressing units 34 may be provided, and the four pressing units 34 may be respectively arranged at four corners of the enclosure support platform 31 to further enhance the pressing effect on the battery module 6.

Further, the module height measuring mechanism 3 may be further provided therein with a limiting block 35. The specific structure of the limiting block 35 may be determined according to actual needs. The limiting block 35 may be installed on the enclosure support platform 31. The limiting block 35 is used to perform a limited fitting with the battery module 6 to prevent displacement of the battery module 6 during the measurement of the battery module 6. Preferably, a plurality of the limiting blocks 35 may be provided. The plurality of limiting blocks 35 are arranged around the middle notch 311 to comprehensively limit the position of the battery module 6. Optionally, the limiting block 35 may be connected to the enclosure support platform 31 by means of adjustable connection, so that the fixing position of the limiting block 35 may be adjusted according to the actual size of the battery module 6.

Further, the glue application device is further provided therein with a movable mount 4, and through the movable mount 4 the glue application mechanism 2 may be installed on the frame 1. In this case, during the working process, the glue application mechanism 2 may move under the action of the movable mount 4, which makes it possible to provide only one glue outlet on the glue application mechanism 2. During the glue application process, after the glue application to a target area is completed, the glue application mechanism 2 may move to the next target under the action of the movable mount 4, which simplifies the overall structural complexity of the glue application device. Optionally, the frame 1 may further be provided with a mechanism for positioning a component to be glued. The mechanism may be arranged below the glue application mechanism 2, thereby reducing the difficulty of glue application and facilitating the rapid solidification of the glue.

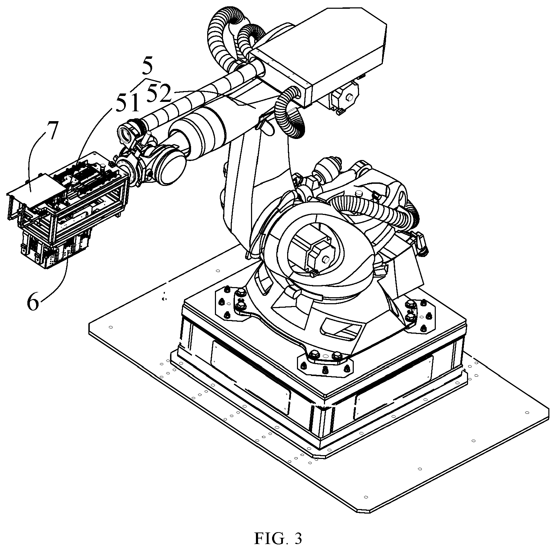

In order to further improve the degree of automation of the glue application device, as shown in FIG. 3, the glue application device provided by the present application may further comprises a feeding manipulator 5. The feeding manipulator 5 may comprise a clamp 51 and a movable unit 52, which are connected to each other. The clamp 51 is used to clamp the battery module 6 and the bottom plate 7. During the assembly process of the battery module 6, the feeding manipulator 5 may first transfer the bottom plate 7 to the mechanism for positioning the component to be glued. Then, the glue application mechanism 2 completes the glue application to this component to be glued under the control of the glue amount control mechanism. Finally, the feeding manipulator 5 clamps the battery module 6 not having the bottom plate 7 and fixedly connects the battery module 6 to the bottom plate 7 to complete the assembly of the battery module 6.

## Claims

1. A glue application device for producing a battery, **characterized by**:
a frame (1);
a glue application mechanism (2), installed on the frame (1);
a module height measuring mechanism (3), used for measuring height differences between a plurality of cells in a battery module (6);
a glue amount control mechanism, communicated with both the module height measuring mechanism (3) and the glue application mechanism (2), and arranged to control the amount of glue applied by the glue application mechanism (2) to the plurality of cells respectively according to the height differences;
wherein the module height measuring mechanism (3) comprises an enclosure support platform (31) and a height measuring unit (32); the enclosure support platform (31) is used for supporting an enclosure of the battery module; the height measuring unit (32) is arranged corresponding to the enclosure support platform (31), and the height measuring unit (32) is arranged to measure distances between bottom surfaces of the plurality of cells and the enclosure support platform (31); **characterized in that** the height measuring unit (32) comprises a plurality of elastic height measuring probes, and the plurality of elastic height measuring probes are arranged in one-to-one correspondence to the plurality of cells to measure distances from the bottom surfaces of the cells and the enclosure support platform.

2. The glue application device according to claim 1, **characterized in that** the module height measuring mechanism (3) further comprises a digital-to-analog conversion unit (33);; the plurality of the elastic height measuring probes are connected to the digital-to-analog conversion unit (33) and the digital-to-analog conversion unit (33) is communicated with the glue amount control mechanism.

3. The glue application device according to claim 2, **characterized in that** a plurality of the height measuring units (32) are evenly and linearly arranged.

4. The glue application device according to claim 2, **characterized in that** a plurality of the height measuring units (32) are arranged at a middle position of the enclosure support platform (31) to measure heights from the middle of the bottoms of the cells to the enclosure support platform (31).

5. The glue application device according to claim 1, **characterized in that** the module height measuring mechanism (3) further comprises a pressing unit (34) installed on the enclosure support platform (31), and arranged to press the battery module (6) downwards.

6. The glue application device according to claim 5, **characterized in that** a plurality of pressing units (34) are provided and a plurality of the pressing units (34) are arranged around the height measuring units (32).

7. The glue application device according to claim 1, **characterized in that** the module height measuring mechanism (3) further comprises a limiting block (35) installed on the enclosure support platform (31) to be engaged and fitted with the battery module (6).

8. The glue application device according to claim 1, **characterized by**, a movable mount (4), through which the glue application mechanism (2) is installed on the frame (1).

9. The glue application device according to claim 1, **characterized by**, a feeding manipulator (5) arranged on a side of the frame (1).

## Patentansprüche

1. Klebstoffauftragsvorrichtung zum Herstellen einer Batterie, **gekennzeichnet durch**:
einen Rahmen (1);
einen Klebstoffauftragsmechanismus (2), der auf dem Rahmen (1) installiert ist;
einen Modulhöhenmessmechanismus (3), der zum Messen von Höhendifferenzen zwischen mehreren Zellen in einem Batteriemodul (6) verwendet wird;
einen Klebstoffmengensteuermechanismus, der sowohl mit dem Modulhöhenmessmechanismus (3) als auch dem Klebstoffauftragsmechanismus (2) in Verbindung steht und dazu angeordnet ist, die durch den Klebstoffauftragsmechanismus (2) auf die mehreren Zellen aufgetragene Klebstoffmenge entsprechend den Höhendifferenzen zu steuern;
wobei der Modulhöhenmessmechanismus (3) eine Gehäusestützplattform (31) und eine Höhenmesseinheit (32) umfasst; wobei die Gehäusestützplattform (31) zum Stützen eines Gehäuses des Batteriemoduls verwendet wird; wobei die Höhenmesseinheit (32) entsprechend der Gehäusestützplattform (31) angeordnet ist und die Höhenmesseinheit (32) dazu angeordnet ist, Abstände zwischen unteren Flächen der mehreren Zellen und der Gehäusestützplattform (31) zu messen; **dadurch gekennzeichnet, dass**
die Höhenmesseinheit (32) mehrere elastische Höhenmesssonden umfasst und die mehreren elastischen Höhenmesssonden in Eins-zu-Eins-Entsprechung zu den mehreren Zellen angeordnet sind, um Abstände von den unteren Flächen der Zellen und der Gehäusestützplattform zu messen.

2. Klebstoffauftragsvorrichtung nach Anspruch 1, **dadurch gekennzeichnet, dass** der Modulhöhenmessmechanismus (3) ferner eine Digital-Analog-Wandlungseinheit (33) umfasst; wobei die mehreren elastischen Höhenmesssonden mit der Digital-Analog-Wandlungseinheit (33) verbunden sind und die Digital-Analog-Wandlungseinheit (33) mit dem Klebstoffmengensteuermechanismus in Verbindung steht.

3. Klebstoffauftragsvorrichtung nach Anspruch 2, **dadurch gekennzeichnet, dass** mehrere der Höhenmesseinheiten (32) gleichmäßig und linear angeordnet sind.

4. Klebstoffauftragsvorrichtung nach Anspruch 2, **dadurch gekennzeichnet, dass** mehrere der Höhenmesseinheiten (32) an einer Mittelposition der Gehäusestützplattform (31) angeordnet sind, um Höhen von der Mitte der Unterseiten der Zellen zu der Gehäusestützplattform (31) zu messen.

5. Klebstoffauftragsvorrichtung nach Anspruch 1, **dadurch gekennzeichnet, dass** der Modulhöhenmessmechanismus (3) ferner eine Andrückeinheiten (34) umfasst, die auf der Gehäusestützplattform (31) installiert und dazu angeordnet ist, das Batteriemodul (6) nach unten zu drücken.

6. Klebstoffauftragsvorrichtung nach Anspruch 5, **dadurch gekennzeichnet, dass** mehrere Andrückeinheiten (34) vorgesehen sind und mehrere der Andrückeinheiten (34) um die Höhenmesseinheiten (32) herum angeordnet sind.

7. Klebstoffauftragsvorrichtung nach Anspruch 1, **dadurch gekennzeichnet, dass** der Modulhöhenmessmechanismus (3) ferner einen Begrenzungsblock (35) umfasst, der auf der Gehäusestützplattform (31) so installiert ist, dass er mit dem Batteriemodul (6) in Eingriff kommt und an diesem befestigt wird.

8. Klebstoffauftragsvorrichtung nach Anspruch 1, **gekennzeichnet durch** eine bewegliche Halterung (4), durch die der Klebstoffauftragsmechanismus (2) auf dem Rahmen (1) installiert ist.

9. Klebstoffauftragsvorrichtung nach Anspruch 1, **gekennzeichnet durch** einen Zuführmanipulator (5), der auf einer Seite des Rahmens (1) angeordnet ist.

## Revendications

1. Dispositif d'application de colle pour la réalisation d'une batterie, **caractérisé par** :
un cadre (1) ;
un mécanisme d'application de colle (2), installé sur le cadre (1) ;
un mécanisme de mesure de hauteur de module (3), utilisé pour mesurer des différences de hauteur entre une pluralité de cellules dans un module de batterie (6) ;
un mécanisme de commande de quantité de colle, communiquant à la fois avec le mécanisme de mesure de hauteur de module (3) et le mécanisme d'application de colle (2), et agencé pour commander la quantité de colle appliquée par le mécanisme d'application de colle (2) sur la pluralité de cellules respectivement en fonction des différences de hauteur ;
le mécanisme de mesure de hauteur de module (3) comprenant une plate-forme de support d'enceinte (31) et une unité de mesure de hauteur (32) ; la plate-forme de support d'enceinte (31) étant utilisée pour supporter une enceinte du module de batterie ; l'unité de mesure de hauteur (32) étant agencée de manière à correspondre à la plate-forme de support d'enceinte (31), et l'unité de mesure de hauteur (32) étant agencée pour mesurer les distances entre les surfaces inférieures de la pluralité de cellules et la plate-forme de support d'enceinte (31) ; **caractérisé en ce que**
l'unité de mesure de hauteur (32) comprend une pluralité de sondes de mesure de hauteur élastiques, et la pluralité de sondes de mesure de hauteur élastiques sont agencées en correspondance univoque avec la pluralité de cellules afin de mesurer des distances à partir des surfaces inférieures des cellules et de la plate-forme de support d'enceinte.

2. Dispositif d'application de colle selon la revendication 1, **caractérisé en ce que** le mécanisme de mesure de hauteur de module (3) comprend en outre une unité de conversion numérique-analogique (33) ; la pluralité des sondes de mesure de hauteur élastiques étant connectées à l'unité de conversion numérique-analogique (33) et l'unité de conversion numérique-analogique (33) étant en communication avec le mécanisme de commande de quantité de colle.

3. Dispositif d'application de colle selon la revendication 2, **caractérisé en ce qu'**une pluralité des unités de mesure de hauteur (32) sont agencées uniformément et linéairement.

4. Dispositif d'application de colle selon la revendication 2, **caractérisé en ce qu'**une pluralité des unités de mesure de hauteur (32) sont agencées à une position médiane de la plate-forme de support d'enceinte (31) pour mesurer des hauteurs depuis le milieu des fonds des cellules jusqu'à la plate-forme de support d'enceinte (31).

5. Dispositif d'application de colle selon la revendication 1, **caractérisé en ce que** le mécanisme de mesure de hauteur de module (3) comprend en outre une unité de pressage (34) installée sur la plate-forme de support d'enceinte (31), et agencée pour presser le module de batterie (6) vers le bas.

6. Dispositif d'application de colle selon la revendication 5, **caractérisé en ce qu'**une pluralité d'unités de pressage (34) sont prévues et une pluralité d'unités de pressage (34) sont agencées autour des unités de mesure de hauteur (32).

7. Dispositif d'application de colle selon la revendication 1, **caractérisé en ce que** le mécanisme de mesure de hauteur de module (3) comprend en outre un bloc de limitation (35) installé sur la plate-forme de support d'enceinte (31) pour être engagé et équipé du module de batterie (6).

8. Dispositif d'application de colle selon la revendication 1, **caractérisé par** un support mobile (4), à travers lequel le mécanisme d'application de colle (2) est installé sur le cadre (1).

9. Dispositif d'application de colle selon la revendication 1, **caractérisé par** un manipulateur d'alimentation (5) agencé sur un côté du cadre (1).
